# EUROPEAN PATENT APPLICATION

(11) **EP 4 822 938 A1**
(43) Date of publication of application: **14.10.2026**
(21) Application number: 25168736.4
(22) Date of filing: 07.04.2025
(51) Int. Cl.: H02J 4/00, C25B 1/04, C25B 15/02, H02J 7/00, H02J 13/00, H02J 15/00, H02J 3/12

(54) **A METHOD FOR OPERATING AN ELECTROLYSIS SYSTEM, RELATED CONTROLLER, POWER SUPPLY AND ELECTROLYSIS SYSTEM**

(71) Applicant: Siemens Energy Global GmbH & Co. KG, 81739 München (DE)
(72) Inventor: Buratckii, Artem, 90459 Nürnberg (DE); Krenz, Tobias, 63067 Offenbach (DE); Loku, Fisnik, 90439 Nürnberg (DE)

(57) **Abstract**

A method for operating an electrolysis system (2) is provided. The method comprises an electrolyzer (6), a transformer (3), and a rectifier (4, 5), wherein the transformer (3) receives an electrical AC power from an electrical grid (104) and provides an AC power (AC) output to the rectifier (5), wherein the rectifier (5) converts the AC power output (AC) into a DC power input (P1) for the electrolyzer (6), the method further comprising i), identifying begin-of-life (BOL) parameters for an electrolyzer stack (6) based on a measurement, wherein a linear dependency between a DC voltage (Udc_{bol}) and a related DC current (Idc) is determined, ii), identifying end-of-life (EOL) parameters for the electrolyzer stack (6) based on a theoretical assumption, wherein a linear dependency between a DC voltage (Udcₑₒₗ) and the related DC current (Idc) is determined, and iii) deriving a polarization curve of an actual ageing status (M) of the electrolyzer stack based on the identified parameters (BOL, EOL), wherein the derived polarization curve is used for determining of a new DC power input (P2) based on a new AC power setpoint requested from a grid operator. Moreover, a related power supply, a controller, a computer program and a related electrolyzer system are provided.

## Description

The present invention relates to a method for operating an electrolysis system and/or a power supply for an electrolyzer system, preferably an industry-scale electrolysis plant. Furthermore, a related power supply system, a corresponding controller and an electrolysis system or electrolysis plant are subject to the present invention.

The electrolyzer system preferably comprises a plurality of electrolyzer stacks set up for so-called PEM electrolysis ("Proton Exchange Membrane"). In this technology, water (H₂O) is split in a catalyst layer, generating hydrogen (H₂) on the cathode side of each cell. "PEM", also standing for "Polymer Electrolyte Membrane" is gaining ever more importance in the industrial production of green hydrogen from renewable energy, among other things, due to its load-dynamic behaviour and suitability to principally cope with fluctuating power levels. As compared to e.g. alkaline electrolysis technology, PEM stands out for quite low operational cost and less complex peripheral and balancing systems. Favourably, high current densities and outputs can be achieved with PEM electrolysis even at highest load gradients and high purity of the hydrogen product.

In PEM electrolysis as well as in alkaline or solid oxide electrolysis to which the presented concept may as well be applicable, hydrogen (H₂) is produced electrolytically from water as a feedstock. wherein water is actually separated into its chemical components, oxygen (O₂) at the anode and hydrogen at the cathode.

Such industry-scale water electrolysis systems have a high DC current demand of, e.g., 7 to 10 kA. In order to cope with such a high current, special power supply topologies with suitable transformers, converters and control functionalities need to be applied. Large-scale electrolysis plants are further required to be operated in a versatile manner to cope with varying loads and also with the ability to support grid functions, thereby as much as possible complying to grid codes imposed by transmission system operators.

The number of installed large-scale power consumption units, such as electrolysis systems, is continuously increasing. The planned electrolysis system projects are reaching capacities in the gigawatt (GW) range. Simultaneously, the share of renewable energy systems is also on the rise. As a result, transmission system operators (TSOs) are in discussions to define the requirements for connecting large-scale power consumption units to the transmission grids. Among these requirements are fault-ride-through (FRT) capabilities. In addition, there are defined requirements for other grid operations.

In this context, frequency stabilizing operations, such as the limited frequency sensitive mode (LFSM) or load shedding, through the adjustment of active power consumption, are key operational requirements for large controllable power consumption units. Another grid-stabilizing function is power oscillation damping (POD), where the active and/or reactive power intake of the consumption unit must be adjusted to counteract low-frequency active and/or reactive power oscillations in the grid. These requirements need to be integrated into valid grid codes worldwide.

For grid operators, these functions must be delivered at the point of connection (PoC), which is the interface with the high or medium voltage electrical source or grid. Grid operators are primarily interested in the exchange of active and reactive power at the PoC. The operations beyond the PoC are however not of primary concern to the grid operator (behind-the-meter concept) and thus fall within the responsibility of the plant operator. Given that the currently sold and future-planned electrolysis plants consist of multiple electrolyzer arrays (the smallest individually adjustable power consumption unit) connected to the same PoC, there is a need for coordinated grid support actions. Until now, each converter system within the subsystem (array) has been responsible for delivering the required grid functionality.

Electrolyzer plants require DC current and DC voltage to produce hydrogen by splitting water. Therefore, AC/DC converters with different power electronic bases like diodes, thyristors, or e.g**.** IGBTs (insulated gate bipolar transistors) are used to convert AC parameters to DC. Converters typically have either DC current, DC voltage, or DC power control mode to achieve the required performance of the device. In the following, we preferably focus on DC current control modes. Anyway, grid operators are interested in active AC power exchange at the PoC. This is directly connected with the system operator's requirements toward electrolyzer plants described above when adjustment of active AC power at the PoC is required if a certain event in the network happens.

For example, in the case of the LFSM-U (underfrequency) function, it is required from an electrolyzer plant operator to adjust up to 40% of active power per only 1Hz deviation from the nominal 50Hz standard within the specified time. The mentioned percentage may however vary depending on the defined "droop" requirement from grid operator. That is to say the adjustment may also amount to only 25% or 30%, for example. However, the open challenge in this case is the resulting DC current adjustment on the electrolyzer side in order to achieve the active power adjustment. As the electrolyzer polarization curve is not linear over the applied DC current, any adjustment in DC current will directly impact DC voltage and therefore the resulting DC power. Moreover, frequent changes in the power setpoint and continuous operation of the electrolysis cells/stacks are expected to have an impact on the ageing behavior and therefore more impact on the relation between AC and DC parameters. Currently, it is hard to estimate the ageing of the stack within a certain period of time, especially when a certain grid function is activated. However, ageing would have a direct impact on the resulting DC power after a certain service is provided.

Currently, no solution to the problem described above exists. The common approach would rather be to consider polarization curve as completely linear dependency between DC voltage and DC current and not to consider the impact of ageing and process parameters on these curves.

It is thus an object of the present invention to provide means that overcome the mentioned challenges and provide a far improved and more flexible operating method for large-scale electrolysis systems and related power supply and control features enabling grid services in compliance with advanced grid requirements.

The mentioned object is achieved by the subject-matters of the independent claims. Advantageous embodiments are subject-matter of the dependent claims.

An aspect of the present invention relates to a method for operating an electrolysis system comprising an electrolyzer, a transformer and a rectifier, like an AC/DC converter, wherein the transformer receives an electrical AC power from the electrical grid and provides a (transformed) related AC power output to the rectifier. The rectifier then converts the AC power output into a DC power input for the electrolyzer.

The method further comprises identifying begin-of-life (BOL) parameters for an electrolyzer stack, cell or series based on the measurement value from a newly commissioned plant device, test device or a test stand, wherein a linear dependency between a DC voltage and a related DC current of the stack is determined.

Likewise, the method comprises identifying end-of-life (EOL) parameters for the electrolyzer stack based on a theoretical assumption, like a simulation, and experience or empiric value or a customer value, wherein a (similar) linear dependency between a DC voltage and the related DC current is determined.

The method further comprises deriving or interpolating a polarization curve of an actual aging status of the electrolyzer stack based on the identified or measured parameters, wherein the derived or obtained polarization curve (for the measured instance) is used for determining of a new DC power based on a new AC power setpoint requested and/or received e.g. from a grid operator.

The inventive method steps are particularly proposed for considering the effect of ageing of the related electrolyzer stack, and/or drift of the system's operating point. The presented method of operating the electrolysis or electrolyzer system could thus be perceived as a method of determining of the new DC power setpoint as a control modification required by a grid code. Regarding temperature and pressure of the system, there is usually a fixed setpoint based on which a correction factors can be calculated. Moreover, temperature and pressure are 'real-time' values which change or drift at the most depending on current operating conditions of the plant, like a DC current setpoint, and the presence of inpurities, for instance.

The term "electrolyzer stack" might herein also imply a module or a series of stacks which might be part of large electrolysis plants. Huge industrial-scale electrolysis plants with a renewable power intake of more than 100 MW might even comprise a plurality of modules or series, wherein each module in turn comprises a plurality of stacks, like two to ten stacks or more, for instance.

As an advantage of the invention, the presented solution enhances the fulfillment and provision of 'grid services' for electrolysis systems, being both applicable to PEM electrolysis, alkaline electrolysis (AEL), and/or the anion-exchange membrane electrolysis (AEM) technology. The mentioned grid services can particularly be provided by the system with higher accuracy, meeting the advanced requirements set by transmission system or transmission grid operators. In other words, the proposed functionality enables adaption of e.g**.** a DC current control for electrolyzer system thereby considering the impact of various process parameters on the polarization curve of the respective electrolyzer unit.

This functionality advantageously allows to comply with very demanding boundary conditions for the connection of large-scale sustainable power consumption units to the transmission grid. Particularly adjustment of consumption of active power posed a key operational requirement for the operation and the control of said units. In the event of a frequency drop in the grid for example, the electrolyzer is expected or required to respond with a reduction in power consumption. In this sense, the invention solves the current problem that the control of the electrolysis system is often oriented towards the DC current (or DC voltage) because it is directly proportional to the hydrogen gas production and cannot be directly used for power regulation. As will be described further below, the voltage is dependent on the cell ageing status and temperature, and can conventionally not be directly correlated with the current flow. This problem is tackled as well by the present proposal.

The above-mentioned new DC current and/or the new DC voltage are calculated and/or set by a controller, preferably an electrolyzer or upper-level control and based on the requested new AC power setpoint; and of course based on the derived polarization curve and actual aging status of the system. According to this embodiment, the new DC power input can be brought into conformity with the new AC power setpoint. According to this merit, grid services can easily be performed by a change of the setpoint and input of the system.

In an embodiment the polarization curve is derived based on the identified or measured DC current and (measured) DC voltage in that the proportion between begin-of-life and end-of-life curves is identified, calculated or approximated. Said derivation might be carried out by means of interpolation or grading of the slopes of the linear curves and/or the related angle between the related BOL and EOL courses. As accurate or reliable EOL parameters are typically only expected to be received or determined after a duration of five to seven years of operation of the related electrolyzer stack, the EOL parameters are based on the theoretical assumption.

The rectifier or AC/DC converter, which can presently be a thyristor, semiconductor or IGBT-based converter, is preferably controlled in the DC current (preferred) or DC voltage control mode. Depending on the control preferences of the plant operator, alternatively DC power control modes would be possible.

In the outlined methodology, the new AC power setpoint is requested from the grid system operator as a grid frequency stabilizing measure with which an active and/or reactive power consumption can be adjusted as a key operational requirement for the large controllable power consumption units at issue. In fact, said AC power setpoint can be requested from the grid operator or defined via the (DC current) control itself or by any upper-level control. Actually, details and configurations depend on specific requirements and the control structure implementation.

Further, as an embodiment of the present solution, a deviation between an AC power and a DC power due to losses in the rectifier, the transformer (including any on-load tap changer and its current tap position), and/or related busbars are considered, such as by the correction factor for related AC/DC losses. Said losses might be determined by fixed values or might as well be (constantly) re-calculated during the operation. As a merit of this embodiment, the working point or setpoint of the system may even account for manufacturing related inaccuracies which factor in as a perturbation in the power supply and indirectly influence the polarization curve of the electrolyzer(s).

In addition to this, the temperature and/or pressure of the electrolyzer stack or array is measured during operation of the system and/or temperature and/or pressure value is transmitted to a rectifier controller which in turn applies an additional correction factor for the linear dependency between the DC voltage and the related DC current, respectively. Consequently, even the parameters or consequences of temperature and pressure may be advantageously accounted for in the scheme of determining the new power setpoint in the operation of the system.

The correction factor might not necessarily be a predetermined value but can be determined from a measurement, preferably measured constantly in the related plant based on the measured temperature or pressure in a test or reference device, like the actual stack of the plant during installation or a test stand, such as prior to plant commissioning and set accordingly in the DC current control loop.

In an embodiment the correction factor and/or the actual ageing status is evaluated constantly or continuously throughout the operation of the electrolyzer system. The said correction factor may in turn depend on the measured DC current, a nominal reference temperature or pressure value and the measured temperature and/or pressure value at a given instance and point in time.

A further aspect of the present invention relates to a computer program (product) comprising instructions which, when the program is executed by a controller, like an electrolyzer controller and/or a rectifier or tap changer controller, cause the controller to carry out the steps of the method of one of the previous claims.

A further aspect of the present invention relates to a computer-readable storage medium having stored thereon the mentioned computer program (product). The computer-readable storage medium may be a punched card, a (floppy) disk storage medium, a hard disk, a CD, a DVD, an USB (Universal Serial Bus) storage device, a RAM (Random Access Memory), a ROM (Read Only Memory) and/or an EPROM (Erasable Programmable Read Only Memory). Preferably, the computer-readable storage medium may be a RAM or a ROM, wherein particularly a flash memory is used. The computer readable-storage medium may also be a data communication network which allows downloading a program code, such as the Internet for example, or further systems.

A further aspect of the present invention relates to a controller, particularly a DC current rectifier controller, comprising a computer-readable storage medium having stored thereon the computer program and optionally means to execute the method as described herein. The controller may be programmable logic controller (PLC). The controller may comprise at least one processor and said computer-readable storage medium, wherein the computer-readable storage medium comprises said computer program which, when executed by the at least one processor, cause the controller to perform the method as described above. In other words, the at least one processor may be a microprocessor and/or a microcontroller and/or a FPGA (Field Programmable Gate Array) and/or a DSP (Digital Signal Processor). The controller may comprise means to execute said method, particularly means to convert an alternating current (AC) electrical power output from an electrical power source into a direct current (DC) electrical power input for an electrolyzer and/or comprise means to drop and/or boost a voltage of the electrical power input to the electrolyzer.

A still further aspect of the present invention relates to a power supply system for a multi-stack electrolyzer system comprising the described controller, being particularly suitable and adapted to perform the proposed method, therefore comprising a transformer, and at least one rectifiers, wherein the transformer receives an electrical AC power from an electrical grid and provides a related AC power output to the rectifier, wherein the rectifier is electrically connected to the transformer on a AC side and suitable to convert the AC power output into a DC power input for the electrolyzer.

A final aspect of the present invention relates to an electrolyzer system or plant with a plurality of electrolyzer stacks, further comprising the controller and/or the power supply system.

The invention also relates to realizations comprising a combination of the features of several of the described embodiments.

Advantages and embodiments relating to the described method and/or the described computer program are valid or pertain likewise to the controller, the power supply and/or the electrolyzer system as described.

Further, features and advantageous embodiments become apparent from the following description of the exemplary embodiment in connection with the Figures.
Figure 1 indicates a circuit diagram of a multi-stack electrolysis system particularly comprising a power supply system which is suitable to perform the inventive controls and operating method.
Figure 2 indicates an exemplary polarization curve with an IV-characteristic of an electrolyzer (stack) further indicating begin-of-life and end-of-life course.
Figure 3 indicates an impact of operating temperature on the indicated polarization curves of such exemplary electrolyzer.
Figure 4 shows an impact of operating pressure on the polarization curve of the electrolyzer.
Figure 5 indicates aspects of the inventive method steps schematically by way of qualitative polarization curves which are used to derive setpoints of an actual aging status of the electrolyzer.
Figure 6 indicate by way of a diagram similar to Figure 5 the additional impact of temperature on the electrolyzer's IV-characteristics.

Like elements, elements of the same kind and identically acting elements may be provided with the same reference numerals in the figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

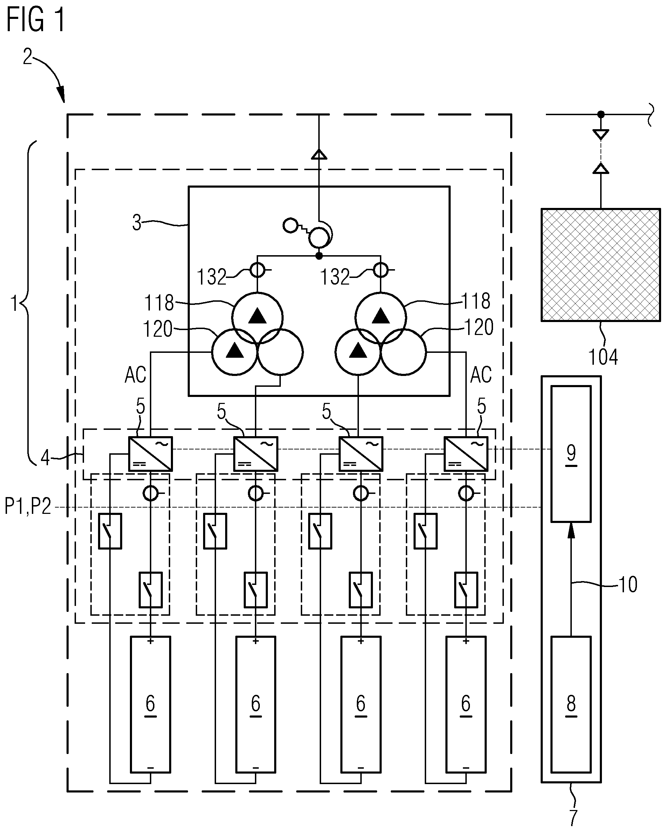

Figure 1 shows a circuit diagram of an industry scale (multi-stack) electrolyzer system 2 or electrolyzer plant including a customized power supply system 1. The plant is preferably suitable to take up a (renewable) power of more than 100 MW up to several gigawatt for the sustainable generation of green hydrogen, such as via PEM, AEM or alkaline electrolysis.

By way of an example, the electrolysis systems mainly comprise a transformer unit 3, a rectifier system 4 comprising several rectifiers or (AC/DC) converter units 5 operating in parallel. Further, a plurality of electrolysis module rows 6 are connected on the DC side of the rectifiers 5. As illustrated in Figure 1, the transformer unit 3 includes an autotransformer with e.g**.** a (on-load) tap changer and two three-winding transformers with primary windings 118 and secondary windings 120 each. Numerals 132 indicate a switching or tap changing element, respectively. The three winding transformers 3 comprise a 15-degree phase difference between them, forming what is known as a so-called 24-pulse system.

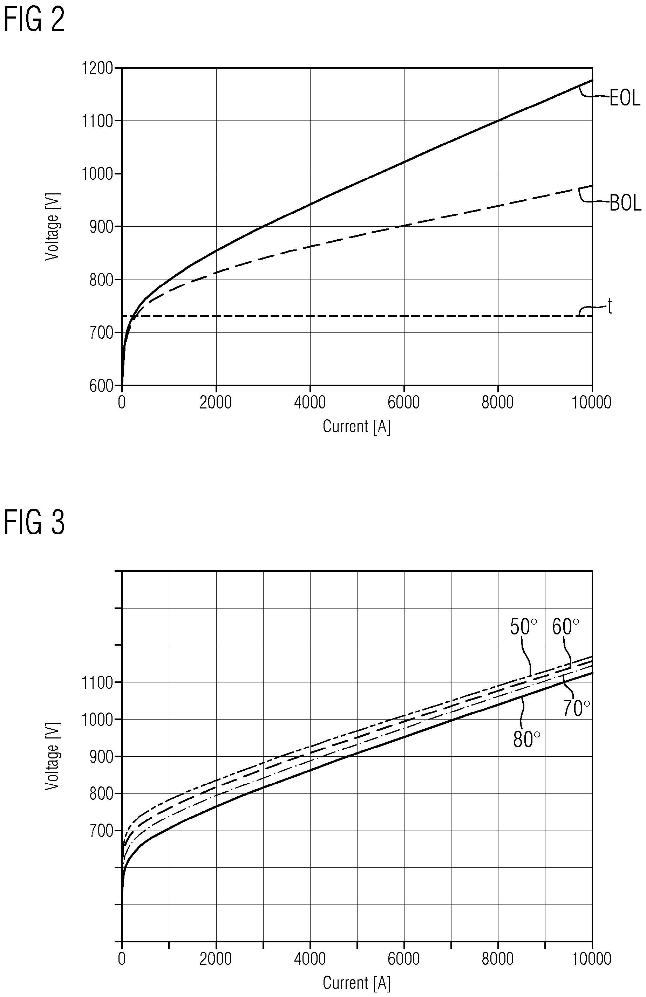

Depending on the transformer design and according to the inventive embodiments, the electrolysis system can, hence, be equipped with power electronics based on rectifier systems which can operate with on-load tap changers (OLTC) or without them. The main functionality of OLTC is actually to keep power factor of the system and adjust or maintain the firing angle in a normal operation range, to compensate for the voltage drop on the terminals of electrolyzer, and to compensate the increased demand in DC voltage for the electrolyzer stacks caused by "ageing effect", such as when they are reaching an end-of-life condition as it is described in Figure 2 onwards. Said firing angles evidently only need to be adjusted in case of thyristor-based (non-IGBT) power supply topologies.

The electrolyzer system 2 comprises a plurality of electrolyzer modules, wherein each module synonymously denotes and may comprise a single or a plurality of electrolysis units or stacks. Preferably each of the modules or stack rows indicated with 6 is expediently connected to the power supply system 1 via a related power supply line.

Consequently, the power supply 1 further comprises a rectifier system 4 operable to convert the alternating current electrical power, expediently from a high or medium voltage level, to a direct current electrical power DC, preferably toward a low voltage (LV) level.

The rectifier system 4 comprises according to the exemplary embodiment of Figure 1 at least one, preferably four, rectifier units 5 which are connected in parallel between the transformer unit 3 on the AC side and electrolysis modules 6 on the DC side. Notably, two rectifier units 5 are connected to different electrolyzer modules 6. Further two of the shown parallel connected converters 3 are connected to the same transformer AC bus.

The power supply 1 includes a power supply connection that is connected to an electrical power source 104, like a transmission grid or island grid of a power system in an island operation mode or in a (public or private) network operation mode.

As a further part of the power supply 1, a control unit 7 is shown, wherein the control unit may be an inventive control unit or may be programmed according to the inventive method. To this effect the control unit 7 is suitable to provide a control functionality according to the method as will particularly be described in the following.

The control 7 may for instance be a micro-processor-based device e.g. including a memory device, data storage device, and an output device for collecting, analyzing, storing and outputting data. The control unit 7 may include or be interlinked to an upper level electrolyzer controller 8 and/or a related (lower level) rectifier controller 9. The electrolyzer controller 8 and the rectifier controller 9 may be connected by a data connection which is indicated by reference numeral 10.

Figure 2 further indicates - by way of the shown current-voltage characteristic an exemplary electrolyzer (stack) - an ageing of the device. It is shown that the polarization courses differ with respect to a begin of life (BOL) and an end of life (EOL) of the device. At the end of life EOL, the electrolyzer may require a significantly higher voltage for the same current. Actually, the curves for the different situations diverge with increased current.

The higher the current or current density, the greater the hydrogen production. This implies that the specific costs for an electrolyzer with a lower current density increase significantly. The choice of the right setpoint and current density should hence always be optimized with regard to minimizing the hydrogen production costs, finding the optimum between efficiency, ageing, capital expenditures and possibly further influences.

It is further evident that below the indicated threshold t for hydrogen production, the production in the related cell stack inherently halts. For this reason, but also in order to find a proper balance or optimum in the electrolyzer's operating point, to save cost and lifetime (spare ageing and deterioration), the presented solution is deemed inevitable, particularly for large (industry-scale) electrolysis plants in the near future. Notably such plants need to comply with all grid requirements soon, like e.g. the fault-ride-through, power oscillation damping and (active and reactive) dynamic power adjustment capabilities mentioned at the beginning.

The effect of temperature on the course of the polarization curve is e.g. indicated in Figure 3 showing the voltage U again as a function of current I parameterized by four different temperatures. It is apparent that the lowest temperature corresponds to the upper most voltage course and the voltage characteristics decrease slightly with increased operating temperature from 50°C to 80°C at the very below curve.

Besides temperature further process values like the (fluid) pressure impact the polarization behavior of the related electrolyzer stack or module. These dependencies are as well described in literature and confirmed via experiments.

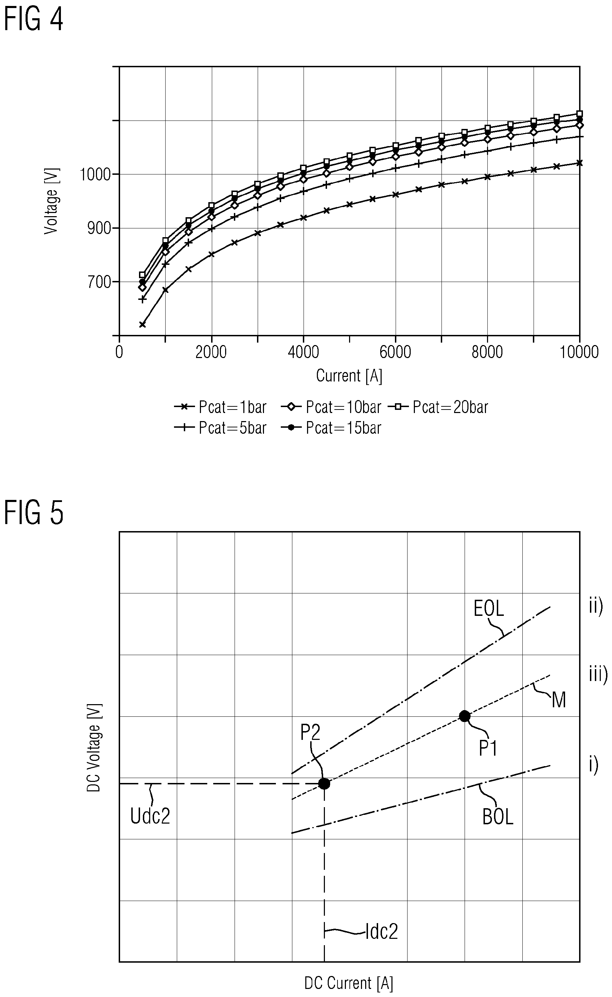

This effect is illustrated in Figure 4 by indicating the courses of different pressure parameters on the I-V (polarization) curve of an exemplary electrolyzer stack 6. It is shown that their 'pressure behavior' is qualitatively the other way round as the temperature meaning that an increased pressure results in increased DC voltage of the stack 6.

It is hence apparent from the described Figures 3 and 4 that temperature and pressure (and possibly further process parameters) can significantly affect the IV characteristics and with it the working point and the implications of power modulation of the system as a consequence of a grid event. In turn, variation of temperature and pressure can, as mentioned above, affect the aging and therewith indirectly (implicitly) the stack's working point.

Figure 5 further illustrates inventive method steps by way of a range of polarization curves.

The inventive method is actually a method for operating an electrolysis system 2 comprising an electrolyzer 6, a transformer 3, and a rectifier 4, 5, wherein the transformer 3 receives an electrical AC power from an electrical grid 104 and provides an AC power AC output to the rectifier , wherein the rectifier 5 converts the AC power output AC into a DC power input P1 for the electrolyzer 6.

The method comprises in step i) identifying begin-of-life BOL parameters for the electrolyzer stack 6 based on a measurement, wherein a linear dependency between a DC voltage Udc_{bol} and the related DC current Idc is determined.

Further, the method comprises in step ii) identifying end-of-life EOL parameters for the electrolyzer stack 6 based on a theoretical assumption, wherein a linear dependency between a DC voltage Udcₑₒₗ and the related DC current Idc is determined.

The voltage could actually be either measured per individual cell or preferably per individual stack (stack voltage measurement). Additionally or alternatively, the total DC voltage per minimum controllable unit or module can be measured of all connected stacks in this series. E.g. six stacks can be connected in a series of module 6, wherein a begin of life average voltage value (bottom line / reference) might be taken and dealt with as DC voltage value in the current scheme.

Moreover, the method comprises in step iii) deriving a polarization curve of or for an actual ageing status M of the electrolyzer stack based on the identified parameters BOL, EOL, wherein the derived polarization curve is used for determining of a new DC power input P2 based on a new AC power setpoint like e.g. requested from a grid operator. This is shown by the middle curve indicated with reference numeral M. This "measured curve" M runs in the middle between the BOL curve and in EOL curve. As outlined herein, the actual course can be anywhere between these boundaries reflecting the actual aging status and further (temperature and pressure etc.) conditions. In the depicted case, an old load or AC power setpoint may correspond to a point indicated with P1 (cf. on the right) along the linear cause of M.

Actually, a new DC current Idc2 and/or a new DC voltage Udc2 are calculated and/or set by a controller 7, 8, 9 based on the requested new AC power setpoint. The new setpoint actually corresponds to the point P2 (on the left) along the measured linear slope M. The polarization curve is particularly assumed or derived based on the measured DC current and DC voltage in that a proportion between begin-of-life BOL and end-of-life EOL curves is identified.

Preferably, in the context of the presented power supply system 1, the rectifiers 5 and/or the electrolyzer(s) are controlled in a DC current control or DC voltage control mode. Preferably, the controls are made by a DC current control.

The new AC power setpoint is expediently requested from the grid operator as a grid frequency stabilizing measure with which an active and/or reactive power consumption can be adjusted.

The presented solution as well facilitates consideration of a deviation between an AC power and a DC power due to losses in the rectifier 4, 5, the transformer 3, and/or related busbars which all may have an effect on the current losses and the stack's working point.

In other, more specific, words the inventive method can be perceived as method to accurately determine a power setpoint as a control modification during the operation of the electrolysis system as described in Figure 1. The proposed method actually considers the effect of ageing, temperature and pressure at certain point following.

At first the BOL parameters (current and voltage course) are identified for a given electrolyzer stack based on measurements from a newly commissioned device. Alternatively, the BOL data can be obtained from a test stand and/or derived from a smaller scale stand.

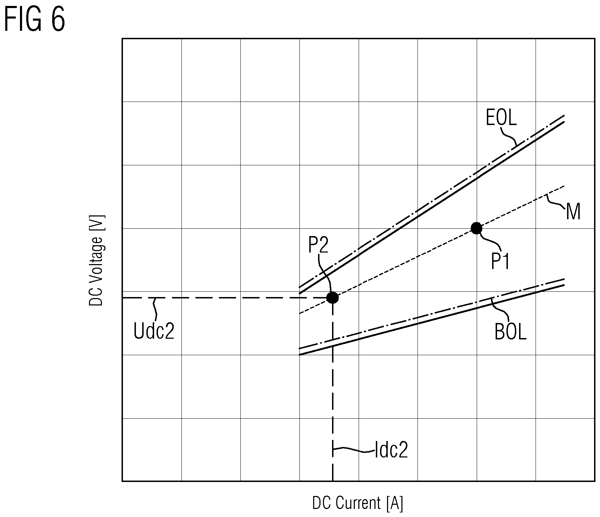

These BOL parameters are shown at the bottom in Figures 5 and 6, respectively. In mathematical terms, the linear BOL curve may be a linear equation solved for the voltage U as a function of current I, U=f(I), with the following dependency: Udcbol = a1*Idc + b1, wherein a1 constitutes the slope and b1 the intercept with the y-axis.

Secondly, i.e. under ii), the related EOL curve - accurately achieved only after five to seven years of operation of a device - is derived from a theoretical assumption, like empiric, simulated or calculated data. The related linear equation for the U=f(I) dependency could then be determined as:
Udceol = a2*Idc + b2, wherein a2 constitutes the slope and b2 the intercept with the y-axis.

Further, based on measured DC current and DC voltage, it is possible to identify proportion between BOL and EOL curves and assume a polarization curve fur current or actual ageing stage and status.

Therefor, the linear equation for the measured DC voltage representing slope M in Figure 5 reads: $Udc \left(measured\right) = a 3 * Idc + b 3 .$

Finally, the obtained polarization curve for the measured instance can be used for determining the new DC power based on the received new AC power setpoint considering e.g. even deviations between AC and DC powers due to losses in converter transformer, busbars etc. To this effect, a new DC power value might in the following way be expressed in dependence of the new AC power setpoint (cf. point P2): Pdc_new = Idc2 * Udc2 = Pac_new - m, where m is the factor for the mentioned (AC/DC) losses.

Using the still following equations, a new DC current and DC voltage for the requested new AC power setpoint can be calculated: $Idc 2 * Udc 2 = Pdc _ new and a 3 * Idc 2 + b 3 = Udc 2 .$

In contrast to Figure 5, Figure 6 indicated an effect of temperature in addition. In this scheme, particularly, parameters like temperature and/or pressure at a specific time and instance can be considered. Basically, the sequence of actions remains consistent; however, it is essential to include the electrolyzer's temperature and pressure, measured e.g. during plant operation. These indices should be transmitted to the DC current controller, which will incorporate additional logics for correction factor(s).

The correction factor k - actually depending on the DC current Idc, temperature T, and pressure - is preferably not a predefined value but should be determined during electrolyzer testing and prior to commissioning of the plant. Said factor k could e.g. be set accordingly in the DC current control loop. The correction factor k thus depends on the measured DC current Idc at that instance, the reference or nominal cooling water temperature (T_ref), and the measured cooling water temperature according to: $\left(T_meas\right) - k = f \left(I_dc_meas, T_ref, T_meas\right) .$

Using the above scheme, the sequence will appear with the subsequent steps as follows:
- Identification of the Begin-of-Life (BoL) parameters for the current electrolyzer stack based on measurements e.g. from the test stand or plant.
- Determining the linear equation for U=f(I) with the dependency: $Udcbol _ k = k * \left(a1*Idc+b1\right) .$
- Determining the linear equation for U=f(I) with the dependency: $Udceol _ k = k * \left(a2*Idc+b2\right) .$
- Based on the measured DC current and DC voltage, it is again possible to identify the proportion between the BOL and EOL curves and assume a polarization curve for the current aging stage; hence determining the linear equation for U=f(I) with: $Udc _ \left(measured\right) _ k = a 3 * Idc + b 3 .$

The obtained polarization curve for the measured instance can then be used to determine the new DC power based on the received new AC power setpoint.

Using again the still following equations, a new DC current and DC voltage for the requested new AC power setpoint can be calculated like: $Idc 2 * Udc 2 = Pdc _ new$ and $k \left(a3*Idc2+b3\right) = Udc 2 .$

In Figure 6, the corrected courses for BOL and EOL are shown by way of the continuous lines, respectively, whereas the dotted lines correspond to the standard values (without parameter correction), respectively.

The example of Figure 6 essentially demonstrates the impact of increased stack temperature on the curves. E.g. a 5-degree difference in stack temperature results in approximately a 0.5% difference in both the resulting DC current and DC voltage, while maintaining the same DC power.

The same approach as for the temperature follows in principle for the parameter of an operating pressure and will not be shown explicitly.

Lastly, it is important to note that depending on the operational point of the electrolyzer, the losses resulting from the converter transformers will deviate, e.g. a higher short circuit impedance value for higher tap changer positions. These additional losses will be included in all of the calculations mentioned above, and are done both preferably for the existing approach and will be included in the improved scheme as well.

The present solution hence overcomes the limitation of the previous solution available on the market.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

## Claims

1. A method for operating an electrolysis system (2) comprising an electrolyzer (6), a transformer (3), and a rectifier (4, 5), wherein the transformer (3) receives an electrical AC power from an electrical grid (104) and provides an AC power (AC) output to the rectifier (5), wherein the rectifier (5) converts the AC power output (AC) into a DC power input (P1) for the electrolyzer (6), the method comprising:
- i) identifying begin-of-life (BOL) parameters for an electrolyzer stack (6) based on a measurement, wherein a linear dependency between a DC voltage (Udc_{bol}) and a related DC current (Idc) is determined,
- ii) identifying end-of-life (EOL) parameters for the electrolyzer stack (6) based on a theoretical assumption, wherein a linear dependency between a DC voltage (Udcₑₒₗ) and the related DC current (Idc) is determined,
- iii) deriving a polarization curve of an actual ageing status (M) of the electrolyzer stack (6) based on the identified parameters (BOL, EOL), wherein the derived polarization curve is used for determining of a new DC power input (P2) based on a new AC power setpoint requested from a grid operator.

2. The method according to claim 1, wherein a new DC current (Idc2) and/or a new DC voltage (Udc2) are calculated and/or set by a controller based on the requested new AC power setpoint.

3. The method according claim 1 or 2, wherein the polarization curve is derived based on the measured DC current and DC voltage in that a proportion between begin-of-life (BOL) and end-of-life (EOL) curves is identified.

4. The method according to one of the previous claims, wherein the rectifier (4, 5) is controlled in a DC current control or DC voltage control mode.

5. The method according to one of the previous claims, wherein the new AC power setpoint is requested from the grid operator as a grid frequency stabilizing measure with which an active and/or reactive power consumption can be adjusted.

6. The method according to one of the previous claims, wherein a deviation between an AC power and a DC power due to losses in the rectifier (4, 5), the transformer (3), and/or related busbars are considered.

7. The method according to one of the previous claims, wherein a temperature (T) and/or pressure of the electrolyser stack (6) is measured during an operation of the system (2), and wherein the temperature and/or pressure value is transmitted to a rectifier controller (9) which applies a correction factor (k) for the linear dependency between the DC voltage (Udc) and the related DC current, respectively.

8. The method according to claim 7, wherein the correction factor (k) is also determined from a measurement in a reference device.

9. The method according to claim 7 or 8, wherein the correction factor (k) is evaluated continuously throughout the operation of the electrolyzer system (2).

10. The method according to one of claim 7 to 9, wherein the correction factor (k) depends on the measured DC current (Idc), a nominal temperature (T) and/or pressure value, and a measured temperature (T) and/or pressure value at a given instance.

11. A computer program comprising instructions which, when the program is executed by a controller, cause the controller to carry out the steps of the method of one of the previous claims.

12. A computer-readable storage medium having stored thereon the computer program of claim 11.

13. A controller (7, 8, 9), particularly a DC current rectifier controller (9), comprising a computer-readable storage medium having stored thereon the computer program of claim 11 and optionally means to execute the method of one claims 1 to 10.

14. A power supply system (1) for a multi-stack electrolyzer system (2) comprising the controller (7, 8, 9) according to claim 13, being particularly suitable and adapted to perform the method according to one of claims 1 to 10, therefore comprising an transformer (3), and at least one rectifier (5), wherein the transformer (3) receives an electrical AC power from an electrical grid (104) and provides a related AC power output to the rectifier (3), wherein the rectifier (5) is electrically connected to the transformer (3) on a AC side and suitable to convert the AC power output (4) into a DC power input (P1, P2) for the electrolyzer (6).

15. An electrolysis system (2) with a plurality of electrolyzer stacks, further comprising the controller (7, 8, 9) of claim 13 and/or the power supply system (1) of claim 14.
